# EUROPEAN PATENT APPLICATION

(11) **EP 4 407 526 A1**
(43) Date of publication of application: **31.07.2024**
(21) Application number: 21958407.5
(22) Date of filing: 24.09.2021
(51) Int. Cl.: G06N 20/00

(54) **DATA COLLECTION PROGRAM, DATA COLLECTION DEVICE, AND DATA COLLECTION METHOD**

(71) Applicant: FUJITSU LIMITED, Kawasaki-shi, Kanagawa 211-8588 (JP)
(72) Inventor: KATOH, Takashi, Kawasaki-shi, Kanagawa 211-8588 (JP); SUZUKI, Kanata, Kawasaki-shi, Kanagawa 211-8588 (JP); SUNAGAWA, Taro, Kawasaki-shi, Kanagawa 211-8588 (JP); SASAKI, Tomotake, Kawasaki-shi, Kanagawa 211-8588 (JP)
(74) Representative: Hoffmann Eitle
(86) International application number: PCT/JP2021/035084
(87) International publication number: WO 2023/047531

(57) **Abstract**

A computer (11) for collecting training data used for training a machine learning model is caused to execute processing of selecting a target data (141) having a lower confidence level than a reference value for an output when the data to be collected is input to the machine learning model, and collecting the training data (142) so that the confidence level becomes higher for a target (3) related to the selected target data (141).

## Description

### FIELD

The present disclosure relates to a data collection program, a data collection device, and a data collection method.

### BACKGROUND

In machine learning, supervised learning using labeled data may be applied to a problem of classifying products and the like.

Since the labeled data has a higher collection cost than the unlabeled data, the labeled data may be generated by the stream-type active learning. In the stream type active learning, unlabeled data that are sequentially input are classified into known data (in other words, data whose labels can be estimated with high confidence by a model being learned) and unknown data (in other words, data whose labels cannot be classified by the model being learned), and labeling is requested for the unknown data.

### SUMMARY

### TECHNICAL PROBLEM

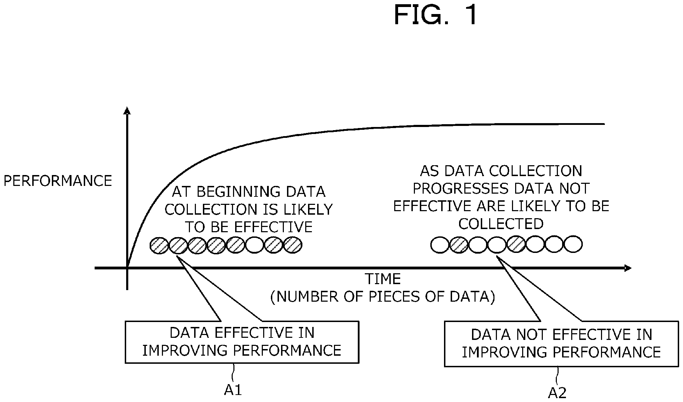

FIG. 1 is a graph illustrating a relationship between a learning time by data input, and a performance of a learned model.

It takes time until all data assumed in an application destination of the learned model is input, and there is a concern that performance improvement cannot be expected with respect to the number of input data in a late stage of learning. In the example illustrated in FIG. 1, at the beginning of the learning time, pieces of data that are effective for improving the performances are likely to be collected, as indicated by the reference sign A1 (see the hatched circles). On the other hand, as the data collection progresses, pieces of data that are not effective for improving the performances (see white circles) are likely to be collected, as indicated by the reference sign A2.

According to an aspect, an object is to improve the accuracy of a machine learning model in a short learning time.

### SOLUTION TO PROBLEM

According to an embodiment of the present disclosure, there is provided a computer-readable storage medium storing a computer program for causing a computer to execute a process of collecting training data used for training a machine learning model, the process including: selecting a target data having a lower confidence level than a predetermined value for an output when the data to be collected is input to the machine learning model; and collecting the training data so that the confidence level is increased for an object related to the selected target data.

### ADVANTAGEOUS EFFECTS OF INVENTION

According to an aspect of the present invention, it is possible to increase the accuracy of a machine learning model in a short learning time.

### BRIEF DESCRIPTION OF DRAWINGS

FIG. 1 is a graph illustrating a relationship between a learning time by data input and a performance of a learned model;
FIG. 2 is a diagram briefly explaining data collection processing by the data collection system in an embodiment;
FIG. 3 is a diagram for explaining collection processing of labeled data and unlabeled data by the data collection system illustrated in FIG. 2;
FIG. 4 is a diagram for explaining an example of the configuration of domain adversarial neural networks (DANN) used in an embodiment;
FIG. 5 is a diagram for explaining a first example of calculation processing of a usefulness score by the DANN illustrated in FIG. 4;
FIG. 6 is a diagram for explaining a second example of the calculation processing of the usefulness score by the DANN illustrated in FIG. 4;
FIG. 7 is a diagram for explaining moving processing of an object to a data acquisition environment by the data collection system illustrated in FIG. 2;
FIG. 8 is a diagram for explaining a first example of data acquisition processing by the data collection system illustrated in FIG. 2;
FIG. 9 is a diagram for explaining a second example of data acquisition processing by the data collection system illustrated in FIG. 2;
FIG. 10 is a diagram for explaining data addition processing and retraining processing by the data collection system illustrated in FIG. 2;
FIG. 11 is a diagram for explaining calculation processing of a threshold value of a score of an object by the data collection system illustrated in FIG. 2;
FIG. 12 is a block diagram schematically illustrating an example of a hardware configuration of a data collection apparatus according to an embodiment;
FIG. 13 is a block diagram schematically illustrating an example of a software configuration of the data collection apparatus illustrated in FIG. 12;
FIG. 14 is a flowchart for explaining data collection processing in an embodiment;
FIG. 15 is a graph exemplifying a relationship between a learning time by inputting data and a performance of a learned model in a related example;
FIG. 16 is a graph exemplifying a relationship between a learning time by inputting data and a performance of a learned model in an embodiment;
FIG. 17 is a diagram for explaining data collection processing by the data collection system in the first modification; and
FIG. 18 is a diagram for explaining data collection processing by the data collection system in the second modification.

### DESCRIPTION OF EMBODIMENTS

### [A] Embodiment Fig.

Hereinafter, an embodiment will be described with reference to the drawings. However, the embodiments described below are merely examples, and there is no intention to exclude various modifications and applications of techniques not explicitly described in the embodiments. That is, the present embodiment can be implemented in various modifications without departing from the spirit of the present embodiment. Each drawing is not intended to include only the constituent elements shown in the drawing, and may include other functions and the like.

In the drawings, the same reference numerals denote the same parts, and a description thereof will be omitted.

### [A-1] Configuration Example

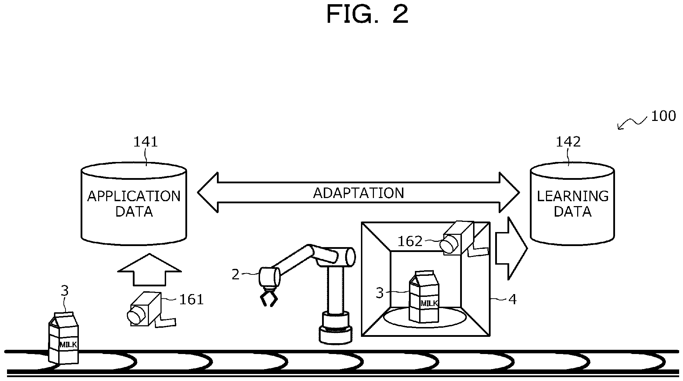

FIG. 2 is a diagram briefly illustrating data collection processing performed by the data collection system 100 according to the embodiment.

The data collection system 100 acquires a captured image of the target object 3 and generates a machine learning model for classifying the target object 3. The data collection system 100 actively acquires unknown data by controlling a data acquisition device such as the cameras 161 and 162.

When data merely having a high similarity to known data is acquired, data that cannot be classified in principle, such as data of only a background or data including two or more objects, may be acquired.

Therefore, the data collection system 100 takes out the target object 3 as a single body by the robot arm 2 and performs imaging of the target object 3 in a space in which an imaging range is fixed, in other words, the data acquisition environment 4.

In the data collection system 100, the camera 161 captures an image of the target 3 moving on a belt conveyor or the like, and stores the image data as applied-data 141. The robot arm 2 grips the target object 3 based on the captured image data, and moves the target object 3 to the data acquisition environment 4. The camera 162 acquires the learning data 142 by moving the imaging range and performing imaging in the data-acquisition environment 4. Adaptation is performed between the applied-data 141 and the learning date 142.

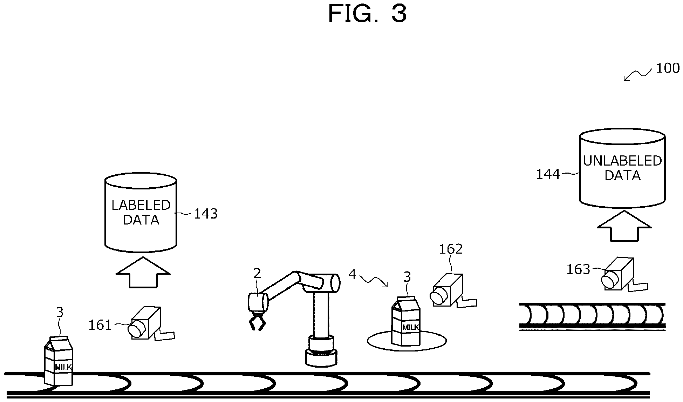

FIG. 3 is a diagram for explaining collection processing of the labeled data 143 and the unlabeled data 144 by the data collection system 100 illustrated in FIG. 2.

In the initial stage of machine learning, a predetermined number of pieces of labeled data 143 for learning and unlabeled data 144 to be applied are collected.

The camera 161 captures an image of the target 3 and stores the captured image as labeled data 143. The camera 162 captures, while moving the imaging range, an image of the target object 3 moved to the data acquisition environment 4 by the robot arm 2. The camera 163, which is different from the camera 161 and the camera 162, acquires unlabeled data 144.

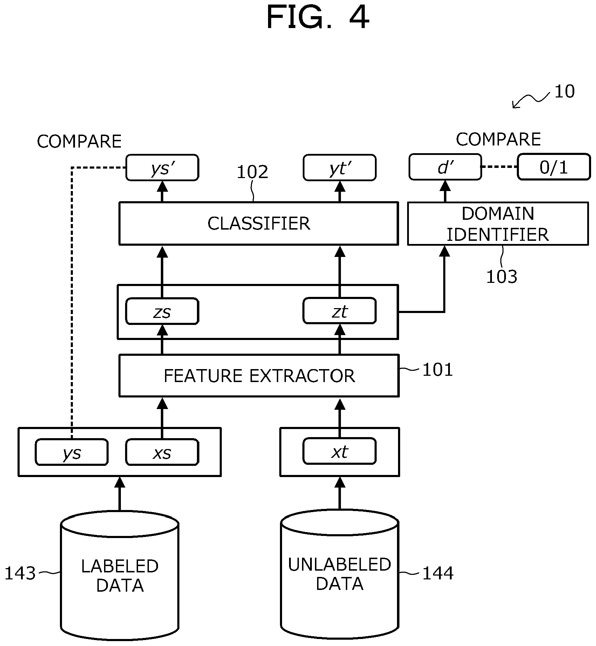

FIG. 4 is a diagram illustrating a configuration example of a DANN 10 used in the present embodiment.

The data collection system 100 trains a classification model using DANN 10. The DANN 10 includes a feature extractor 101, a classifier 102, and a domain identifier 103.

The classifier 102 is trained to estimate the label of the labeled data 143 from the output of the feature extractor 101. The domain identifier 103 is trained to estimate a data source (0: labeled data / 1: unlabeled data) from the output of the feature extractor 101. The feature extractor 101 is trained so that the classifier 102 succeeds and the domain identifier 103 fails.

The feature extractor 101 generates an output zs and an output zt, from an output xs that is from the labeled data 143 and an output xt that is from the unlabeled data 144, respectively. The classifier 102 generates outputs ys' and yt' from the outputs zs and zt, respectively, and compares the output ys' with the output ys of the labeled data 143. The domain identifier 103 generates an output d' from the outputs zs and zt, and compares the output d' with the data source (0: labeled data / 1: unlabeled data).

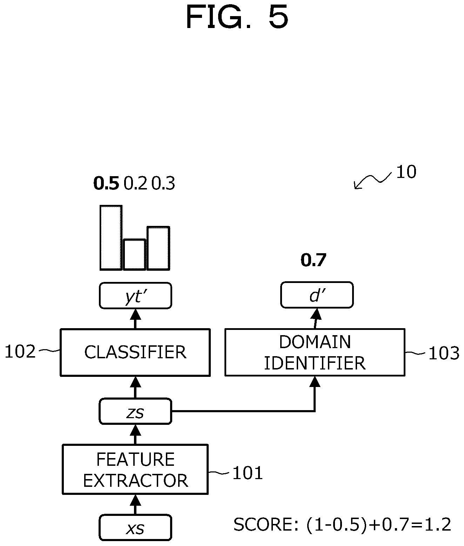

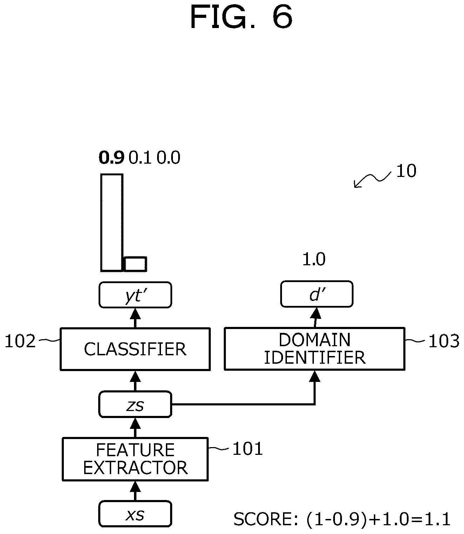

FIG. 5 is a diagram illustrating a first example of the collection processing of the usefulness score by the DANN10 illustrated in FIG. 4. FIG. 6 is a diagram illustrating a second example of the collection processing of the usefulness score by the DANN 10 illustrated in FIG. 4.

When data that has a property close to that of the applied-data 141 and cannot be classified by the current classifier 102 is used for training, performance improvement at the application destination can be expected. Therefore, as an index indicating how much unknown data is included, the usefulness score is calculated by Formula: (1 - yt'_max) + a, where yt'_max is the maximum value of the output yt' from the classifier, and a is the output d' from the domain identifier 103.

In the example illustrated in FIG. 5, since yt'_max = 0.5 and a = 0.7, the usefulness score is obtained by (1-0. 5) + 0.7 = 1.2. In the example illustrated in FIG. 5, since yt'_max = 0.9 and α = 1.0, the usefulness score is obtained by (1 - 0. 9) + 1.0 = 1.1.

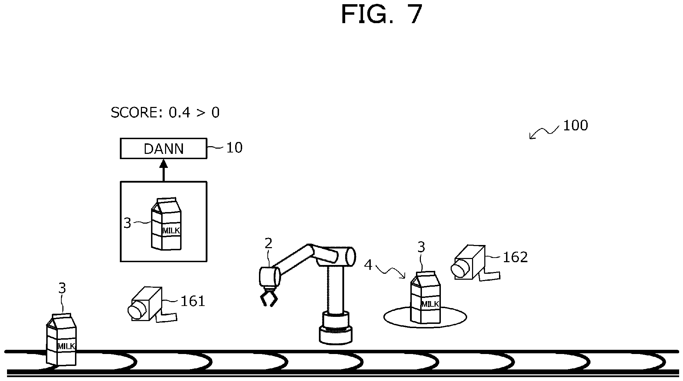

FIG. 7 is a diagram for explaining moving processing of the target object 3 to the data acquisition environment 4 by the data collection system 100 shown in FIG. 2.

The DANN10 calculates the score of the image captured by the camera 161. The robot arm 2 moves the target object 3 to the data acquisition environment 4 when the score exceeds a threshold (for example, the initial value is 0).

In the example illustrated in FIG. 7, since the score is 0.4 and is larger than the threshold value "0", the target object 3 is moved to the data acquisition environment 4.

In other words, the data-collection program selects target data (in other words, applied-data) whose confidence levels for outputs that are when the data to be collected are input to the machine learning model are lower than thresholds, and collects training data (in other words, the learning data 142) so that the confidence level for the target object 3 related to the selected target data is high.

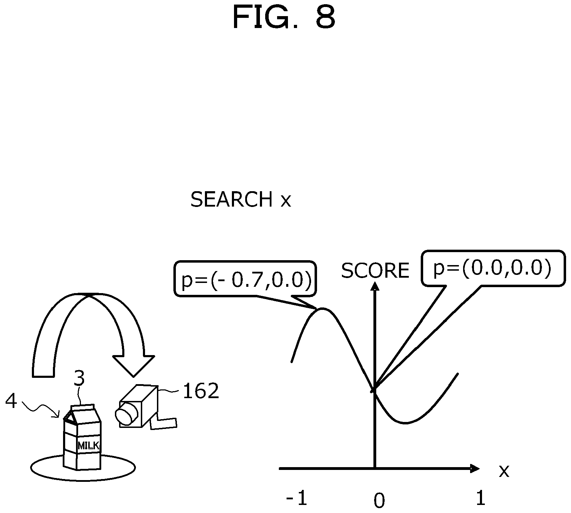

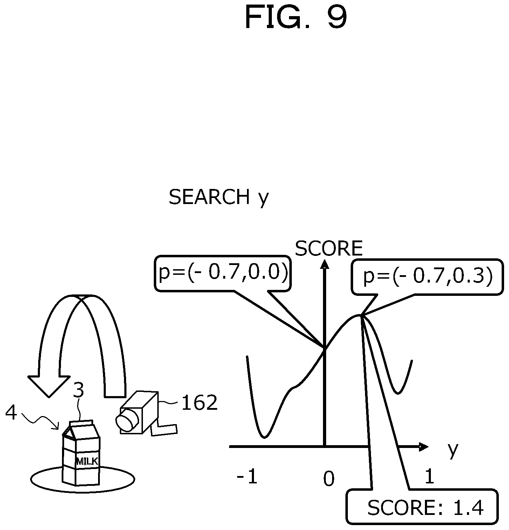

FIG. 8 is a diagram illustrating a first example of data acquisition processing by the data collection system 100 illustrated in FIG. 2. FIG. 9 is a diagram illustrating a second example of the data acquisition processing performed by the data collection system 100 illustrated in FIG. 2.

By adjusting each of the two parameters x and y of the camera 162 to capture the target object 3,the data collection system 100 searches for one or more parameters that maximize the score. In the present embodiment, the data collection system 100 searches for one parameter from the initial parameter p = (0.0,0.0) by the greedy method.

In the example illustrated in FIG. 8, for the parameter x, the parameter p = (-0.7,0.0) at which the score is the local maximum is searched. In the example illustrated in FIG. 9, for the parameter y, the parameter p = (-0.7,0.3) at which the score is locally maximized at 1.4 is searched.

In other words, the data-collection program controls the position and the posture of the camera 162 that captures the target object 3, thereby collecting the training-data (in other words, the learning data 142) so that the confidence degree becomes high.

The data-collection program also requests the operator to perform labeling on the target object 3 for the training data (in other words, the learning data 142) collected with a high confidence.

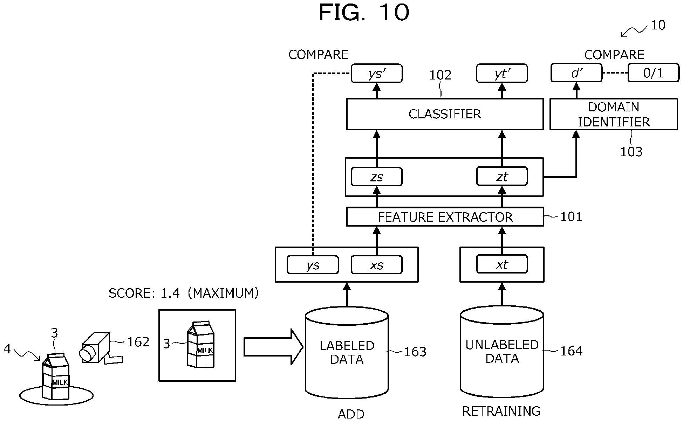

FIG. 10 is a diagram for explaining the data addition processing and the retraining processing performed by the data collection system 100 illustrated in FIG. 2.

The labeling collection system 100 requests the operator to perform labelling on the image of the target 3 having the local maximum score 1.4, to add the labeled data 143 to the learning data 142. The data collection system 100 adds the learning data 142 to the unlabeled data 144 and performs retraining.

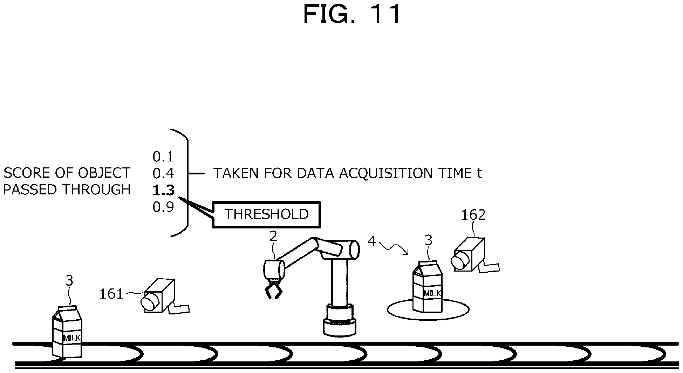

FIG. 11 is a diagram illustrating calculation processing of a threshold of a score of the target object 3 by the data collection system 100 illustrated in FIG. 2.

After the search for the target object 3 by the camera 162 is completed, the data collection system 100 returns the target object 3 from the data acquisition environment 4 to the original position such as the belt conveyor. The data collection system 100 records the score of the target object 3 passing in front of the camera 161 during the use of the photographing environment and the required time t, and sets the maximum score among them as a threshold. Thereafter, the data collection system 100 uses, as the threshold, the maximum score of the product that has passed through the camera 161 in the latest t hours as the threshold until the next target object 3 is selected.

In the example illustrated in FIG. 11, the value selected as the threshold is "1.3", which is the maximum value from among scores when the target 3 passes in front of the camera 161 during the time t taken for data acquisition.

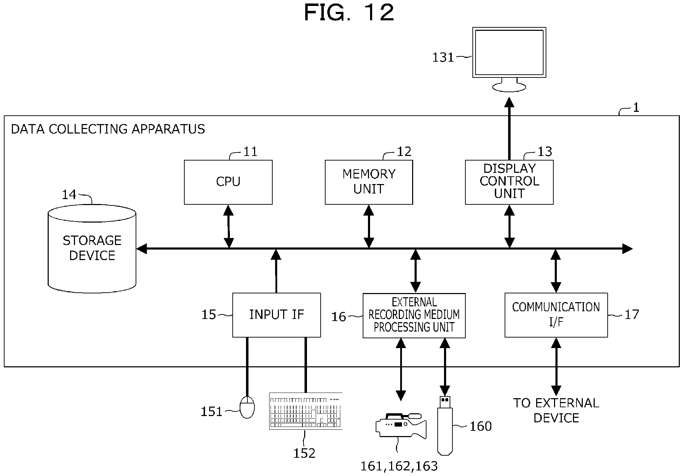

FIG. 12 is a block diagram schematically illustrating an example of a hardware configuration of the data collection device 1 according to the embodiment.

As illustrated in FIG. 12, the data collection apparatus 1 includes a CPU 11, a memory unit 12, a display control unit 13, a storage device 14, an input interface (IF) 15, an external recording medium processing unit 16, and a communication IF 17.

The memory unit 12 is an example of a storage unit, and is illustratively a read only memory (ROM), a random access memory (RAM), or the like. The ROM as the memory unit 12 may store a program such as a basic input/output system (BIOS). The software program in the memory unit 12 may be loaded into the CPU11 and executed as required. The RAM as the memory unit 12 may be used as a temporary recording memory or a working memory.

The display control unit 13 is coupled to and controls the display device 131. The display device 131 is a device configured to display various kinds of information for an operator or the like, and may be a liquid crystal display, an organic light-emitting diode (OLED) display, a cathode ray tube (CRT), an electronic paper display, or the like. The display device 131 may be in combination with an input device, and may be, for example, a touch panel.

The storage device 14 is a storage device with high IO performance, for example, a dynamic random access memory (DRAM), an SSD, a storage class memory (SCM), or an HDD.

The input IF 15 may be coupled to an input device such as a mouse 151 or a keyboard 152, and may control the input device such as the mouse 151 or the keyboard 152. The mouse 151 and the keyboard 152 are examples of input devices. An operator performs various input operations via these input devices.

The external recording medium processing unit 16 is configured to be able to mount the recording medium 160. The external recording medium processing unit 16 is configured to be able to read information stored in the recording medium 160 in a state where the recording medium 160 is mounted. In this example, the recording medium 160 is portable. For example, the recording medium 160 is a flexible disk, an optical disk, a magnetic disk, a magneto-optical disk, a semiconductor memory, or the like. The external recording medium processing unit 16 may be coupled to the cameras 161, 162, and 163, to acquire a video captured by the cameras 161, 162, and 163 and control the position and the posture of the camera 162.

The communication IF 17 is an interface for enabling communication with an external device.

The CPU 11 is an example of the processor, and is a processing device that performs various controls and calculations. The CPU 11 implements various functions by executing an operating system (OS) and programs loaded into the memory unit 12.

The device for controlling the operation of whole of the data collection device 1 is not limited to the CPU 11, and may be any one of an MPU, a DSP, an ASIC, a PLD, and an FPGA, for example. Further, the device for controlling the operation of whole of the data collection device 1 may be a combination of any two or more of the CPU, the MPU, the DSP, the ASIC, the PLD, and the FPGA. Note that MPU is an abbreviation of Micro Processing Unit, DSP is an abbreviation of Digital Signal Processor, and ASIC is an abbreviation of Application Specific Integrated Circuit. In addition, PLD is an abbreviation of Programmable Logic Device, and FPGA is an abbreviation of Field Programmable Gate Array.

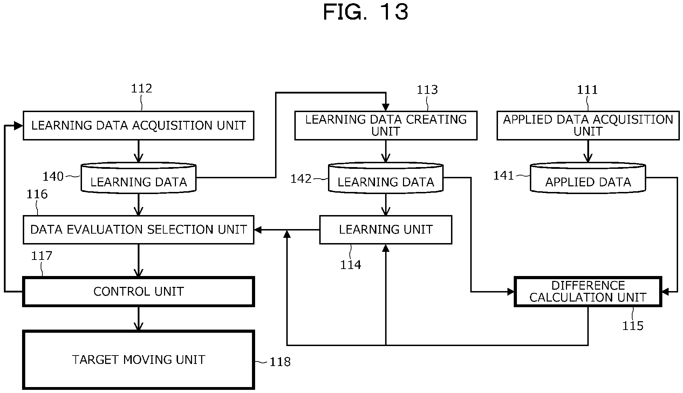

FIG. 13 is a block diagram schematically showing an example of the software configuration of the data collection apparatus 1 illustrated in FIG. 12.

The CPU 11 of the data collection apparatus 1 functions as an applied-data acquisition unit 111, a learning data acquisition unit 112, a learning data creating unit 113, a learning unit 114, a difference calculation unit 115, a data-evaluation selection unit 116, a control unit 117, and a target moving unit 118.

The applied-data acquisition unit 111 acquires an image of the target 3 captured by the camera 161, and stores the acquired image as the applied-data 141.

The learning data acquisition unit 112 obtains an image of the target object 3 captured by the camera 162 in the data acquisition environment 4, to store the obtained image as the acquired data 140.

The learning data creating unit 113 acquires a label, which has been assigned by the operator based on the acquired data 140, to store the acquired label as the learning data 142.

The learning unit 114 corresponds to the feature extractor 101 and the classifier 102 of the DANN 10 illustrated in, for example, FIG. 4. The learning unit 114 trains a classification model using the learning data 142.

The difference calculation unit 115 corresponds to the domain identifier 103 of DANN10 illustrated in, for example, FIG. 4. The difference calculation unit 115 calculates the difference between the applied-data 141 and the learning data 142.

The data evaluation selection unit 116 calculates, based on the acquired data 140, a parameter of the posture of the camera 162 in which the score of the image of the target object 3 captured by the camera 162 is maximized. The data evaluation selection unit 116 specifies the target object 3 to be moved to the data acquisition environment 4 for which the learning unit 114 determines that the usefulness score is equal to or greater than the threshold value.

The control unit 117 causes the learning data acquisition unit 112 to control the posture of the camera 162 based on the calculation result of the parameter of the posture by the data evaluation selection unit 116. The control unit 117 performs control such that the target moving unit 118 moves the target object 3 specified by the data evaluation selection unit 116 to the data acquisition environment 4 by the robot arm 2.

The target moving unit 118 moves the target object 3 to the data acquisition environment 4 by the robot arm 2 based on the control by the control unit 117.

### [A-2] Operation

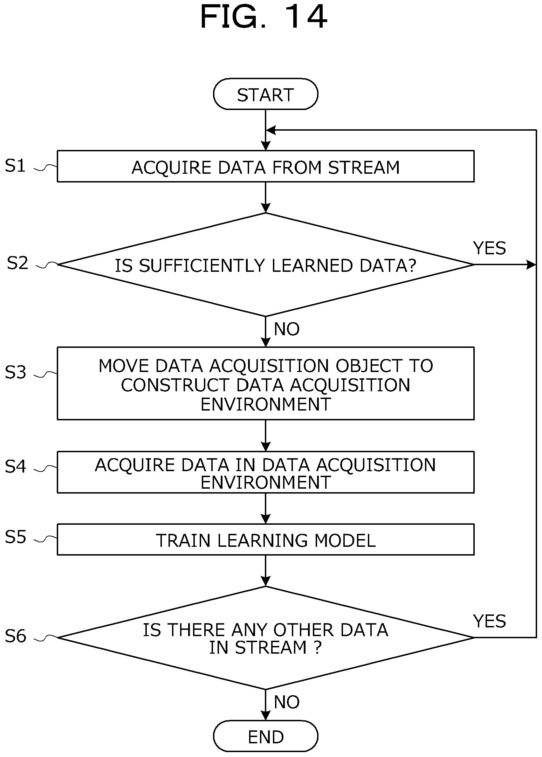

The data collection processing in the embodiment will be described with reference to the flowchart (steps S1 to S6) illustrated in FIG. 14.

The applied-data acquisition unit 111 acquires the target object 3 from the camera 161 that captures the stream of the belt conveyor or the like (step S1).

The control unit 117 determines whether the data of the target object 3 corresponds to data that has been sufficiently learned (step S2).

When the data of the target object 3 corresponds to data that has been sufficiently learned (YES in Step S2), the process returns to Step S1.

On the other hand, when the data of the target object 3 is not data that has been sufficiently learned (NO in Step S2), the target moving unit 118 moves the target object 3 by the robot arm 2 to construct the data-acquisition environment 4 (step S3).

The learning data creating unit 113 acquires data from the camera 162 in the data-acquisition environment 4 (step S4).

The learning unit 114 trains the learning model (step S5).

The applied-data acquisition unit 111 determines whether there is still any other data in the stream (step S6).

When there is still any other data in the stream (YES in Step S6), the process returns to Step S1.

On the other hand, when there is no other data in the stream (NO in Step S6), the data collection processing is terminated.

### [A-3] Effect

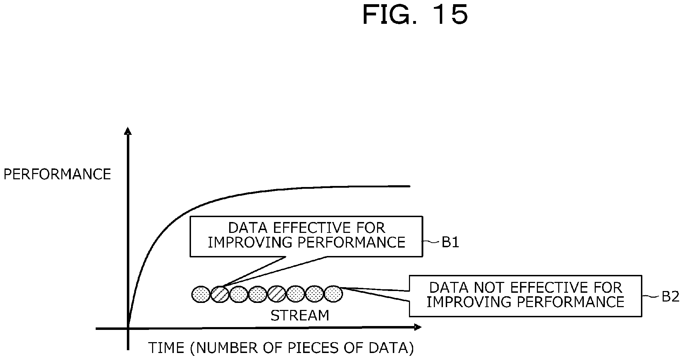

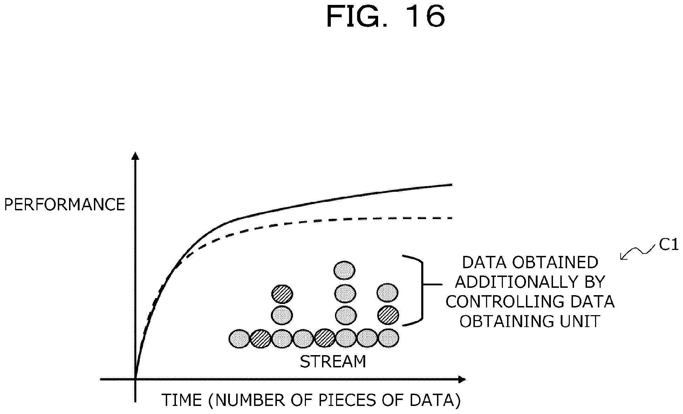

FIG. 15 is a graph illustrating a relationship between a learning time by inputting data and a performance of a learned model in the related example. FIG. 16 is a graph illustrating a relationship between a learning time by inputting data and the performance of a learned model in the embodiment.

In the data collection processing in the relevant example illustrated in FIG. 15, among data that are effective for improving performances, as indicated by the reference sign B1, there are many pieces of data that are not effective for improving performances as indicated by the reference sign B2. Thus, even if the learning time (in other words, the number of learning data) increases, the performances of the learned models do not improve.

On the other hand, as indicated by reference sign C1 in FIG. 16, the learning data collection processing according to the embodiment controls the data acquisition device such as the camera 162 to obtain the data obtained additionally. Thus, as the learning time (in other words, the number of pieces of data) increases, the performances of the learned models improve.

According to the data collection program, the data collection device 1, and the data collection method in the above-described embodiment, for example, the following operational effects can be achieved.

The data collection program selects, from among data to be collected, target data having a confidence level that is for an output when the data is input to the machine learning model and is lower than a threshold, and collects, for the target object 3 regarding the selected target data, the training data so that the confidence level become higher.

Thus, the accuracy of the machine learning model can be improved in a short learning time.

### [B] First Modification

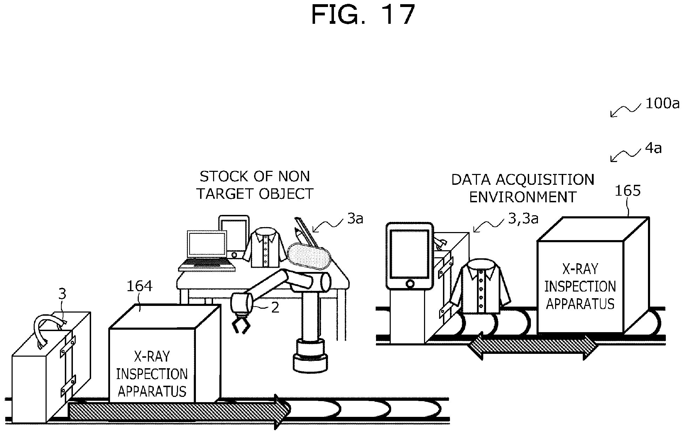

FIG. 17 is a diagram illustrating data collection processing performed by the data collection system 100a according to the first modification.

In the first modification, the data collection system 100a performs object detection in the package.

The X-ray inspection apparatus 164 is an example of the data acquisition device, and causes a package as the target object 3 to pass in one direction by a belt conveyor.

The X-ray inspection apparatus 165 is an example of the data acquisition device disposed in the data-acquisition environment 4a. The target object 3 and the package of the non-inspection target object 3a are taken in and out in both directions by a belt conveyor.

The robot arm 2 moves the inspection target to the data-acquisition environment 4a. The robotic arm 2 also moves at least a portion of the stock of non-inspection target objects 3a for inspection, together with the target object 3, to the data-acquisition environment 4a.

The way of arranging the packages in the data-acquisition environment 4a corresponds to a parameter of the data acquisition device described above with reference to FIGS. 8 and 9, and the like, and it is possible to search for the arrangement of the packages that is difficult to detect.

According to the data collection system 100a of the first modification, in addition to the operational effects that can be achieved in the above-described embodiment, it is possible to increase the accuracy of a machine learning model in a short learning time even in a machine learning model for X-ray inspection such as hazardous material detection.

### [C] Second Modification

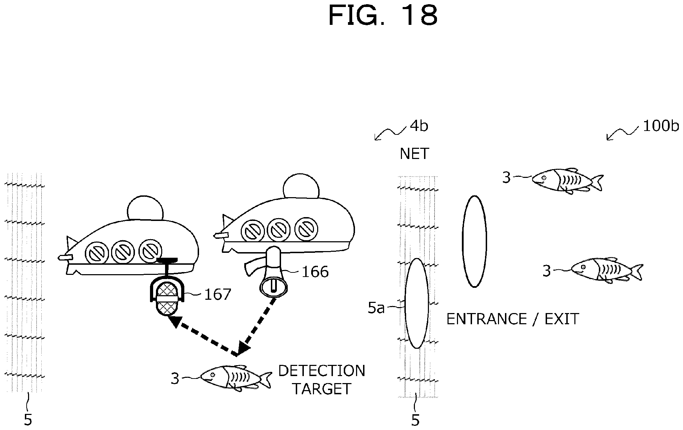

FIG. 18 is a diagram illustrating data collection processing performed by the data collection system 100b according to the second modification.

In the second modification, the data collection system 100b performs underwater object detection using acoustic waves.

The speaker 166 is an example of the date acquisition device and may be referred to as an acoustic wave source. The microphone 167 is an example of the data acquisition device and may be referred to as a measurement device. The speaker 166 and the microphone 167 are attached to different submarines or unmanned underwater vehicles, respectively, and are movable in water in the data-acquisition environment 4b, and detect the target 3 by the ultrasonic radar.

The data-acquisition environment 4b is a region surrounded by the net 5, and includes an entrance/exit 5a for taking the data-acquisition target 3 such as fish into and out of the net 5.

The way of arranging the speaker 166 and the microphone 167 in the data-acquisition environment 4b corresponds to a parameter of the data-acquisition device described above with reference to FIGS. 8 and 9. The speaker 166 and the microphone 167 can be searched for the detection of the target object 3.

According to the data collection system 100b in the second modification, in addition to the operation and effect that can be achieved in the above-described embodiment, even in the machine learning model for searching for fish or the like in water by the ultrasonic radar, the accuracy of the machine learning model can be improved in a short learning time.

### [D] Others

The disclosed technique is not limited to the above-described embodiments, and various modifications can be made without departing from the spirit of the present embodiments. The configurations and processes of the present embodiment can be selected as necessary, or may be combined as appropriate.

### CITATION LIST

### PATENT LITERATURE

[Patent Document 1] Japanese Laid-open Patent Publication No. 2020 - 119283

### REFERENCE SIGNS LIST

1: data collection device
2: robot arm
3: object
3a: non-target object
4, 4a, 4b: data-acquisition environment
5: net
5a: doorway
10: feature extractor
11: CPU
12: memory unit
13: display control unit
14: storage device
15: input IF
16: external recording medium processing unit
17: communication IF
100, 100a, and 100b: data collection system
101: feature extractor
102: classifier
103: domain identifier
111: applied-data acquisition unit
112: learning data acquisition unit
113: learning data creating unit
114: learning unit
115: difference calculation unit
116: data evaluation selection unit
117: control unit
118: target moving unit
131: display device
140: acquired data
141: applied-data
142: learning data
143: labeled data
144: unlabeled data
151: mouse
152: keyboard
160: recording medium
161, 162, and 163: camera
164 and 165: X-ray inspection apparatus
166: speaker
167: microphone

## Claims

1. A data collection program for causing a computer, which is configured to collect training data used for training a machine learning model, to perform processing comprising:
selecting a target data having a confidence level lower than a predetermined value, the confidence level corresponding to a confidence for an output from the machine learning model when collected data is input into the machine learning model; and
collecting, for a target object related to the selected target data, the training data such that the confidence is high.

2. The data collection program according to claim 1, the processing further comprising:
collecting the training data so that the confidence is increased by controlling a position and an orientation of a camera that captures the target object.

3. The data collection program according to claim 1 or 2, the processing further comprising:
requesting an operator to perform labeling of the target object, on the training data collected so as to increase the confidence.

4. A data collection apparatus for collecting training data used for training a machine learning model, the data collection apparatus comprising a processor configured to perform processing comprising:
selecting a target data having a confidence level lower than a predetermined value, the confidence level corresponding to a confidence for an output from the machine learning model when collected data is input into the machine learning model; and
collecting, for a target object related to the selected target data, the training data such that the confidence is high.

5. The data collection apparatus according to claim 4, the processing further comprising:
collecting the training data so that the confidence is increased by controlling a position and an orientation of a camera that captures the target object.

6. The data collection apparatus according to claim 4 or 5, the processing further comprising:
requesting an operator to perform labeling of the target object, on the training data collected so as to increase the confidence.

7. A data collection method implemented by a computer configured to collect training data used for training a machine learning model, the data collection method comprising:
selecting a target data having a confidence level lower than a predetermined value, the confidence level corresponding to a confidence for an output from the machine learning model when collected data is input into the machine learning model; and
collecting, for a target object related to the selected target data, the training data such that the confidence is high.

8. The data collection method according to claim 7, further comprising:
collecting the training data so that the confidence is increased by controlling a position and an orientation of a camera that captures the target object.

9. The data collection method according to claim 7 or 8, further comprising:
requesting an operator to perform labeling of the target object, on the training data collected so as to increase the confidence.
